# EUROPEAN PATENT SPECIFICATION

(11) **EP 3 064 558 B1**
(45) Date of publication and mention of the grant of the patent: **11.03.2020**
(21) Application number: 14857099.7
(22) Date of filing: 27.10.2014
(51) Int. Cl.: C09F 1/02

(54) **METHOD FOR MANUFACTURING LIGHT-COLORED REFINED TALL OIL ROSIN AND TALL OIL ROSIN ESTER, AND LIGHT-COLORED REFINED TALL OIL ROSIN AND TALL OIL ROSIN ESTER OBTAINED VIA SAID METHOD**
VERFAHREN ZUR HERSTELLUNG VON HELLFARBIGEM RAFFINIERTEM TALLÖL-KOLOPHONIUM UND TALLÖL-KOLOPHONIUM-ESTER SOWIE IN DIESEM VERFAHREN HERGESTELLTES HELLFARBIGES RAFFINIERTES TALLÖL-KOLOPHONIUM UND TALLÖL-KOLOPHONIUM-ESTER
PROCÉDÉ POUR PRODUIRE UNE COLOPHANE DE TALL OIL ET UN ESTER DE COLOPHANE DE TALL OIL DE COULEUR CLAIRE RAFFINÉS ET COLOPHANE DE TALL OIL ET ESTER DE COLOPHANE DE TALL OIL DE COULEUR CLAIRE RAFFINÉS OBTENUS PAR LEDIT PROCÉDÉ

(30) Priority: 29.10.2013 JP 2013224386
(43) Date of publication of application: 07.09.2016
(73) Proprietor: Arakawa Chemical Industries, Ltd., Osaka-shi Osaka 541-0046 (JP)
(72) Inventor: YAMADA, Yukiharu, Osaka-shi Osaka 538-0053 (JP); SONG, Xiaofeng, Osaka-shi Osaka 538-0053 (JP)
(74) Representative: Gille Hrabal
(86) International application number: PCT/JP2014/078492
(87) International publication number: WO 2015/064536

(56) References cited:
- WO-A1-91/14748
- JP-A- S5 643 375
- JP-A- H08 209 070
- JP-A- S60 255 868
- US-A- 2 239 555
- US-A- 3 433 815
- US-A- 4 585 584
- US-A- 6 084 061

## Description

### TECHNICAL FIELD

The present invention relates to a method for manufacturing a light-colored refined tall oil rosin and a tall oil rosin ester, and a light-colored refined tall oil rosin and a tall oil rosin ester obtained via this method.

### BACKGROUND ART

Rosin, which is a natural resin acid, has different names depending on a collecting method thereof and is generally referred to as gum rosin, wood rosin and tall oil rosin. Tall oil rosin is a distillate of crude tall oil (neutralized acid of black liquor obtained in a production of kraft pulp), and also having therein a small amount of subcomponents such as fatty acids as other distillates. Tall oil rosin generally has a high content rate of sulfur components compared with that of gum rosin, and tends to be inferior in odor or color.

Rosin esters are used in various applications including a tackifier for adhesives, a modifier of rubbers and various plastics, a raw material for traffic paints and the like. However, the appearance of rosin esters is colored in yellow to yellowish brown, and an odor, heating stability, weather resistance and the like thereof are not satisfactory. Particularly, rosin esters using tall oil rosin as raw material rosin tend to be inferior in color or odor compared with rosin esters obtained using gum rosin or wood rosin.

On the other hand, tall oil rosin which is relatively stable in price has attracting attention with the recent steep rise in a gum rosin price. Therefore, a development and launch of light-colored tall oil rosin or a tall oil rosin ester in which the above disadvantages are overcome are strongly demanded.

To overcome the above disadvantages of tall oil rosin, for example, Patent Documents 1 and 2 are introduced as prior art documents. Patent Document 1 discloses obtaining purified tall oil rosin by subjecting tall oil rosin to an adsorption treatment with acid white clay or/and active white clay, followed by separating (filtering) the white clay and then distilling the filtrate. The document further discloses a method of esterifying the purified tall oil rosin with an alcohol in the presence of a specific organic sulfur-based compound. Patent Document 2 discloses that an ester having an excellent color tone is obtained by esterifying tall oil rosin with pentaerythritol in the presence of an activated carbon.

### PRIOR ART DOCUMENT(S)

### Patent Document(s)

Patent Document 1: JP 8-209070 A
Patent Document 2: US 4585584 A

### SUMMARY OF THE INVENTION

In the method described in Patent Document 1, a two-step process of filtering white clay and subsequently distilling a filtrate is necessary to obtain purified tall oil rosin. One step process of direct-distilling accompanying no separation step of the white cray would result in a decomposition (for example, decarbonation) of tall oil rosin is caused. Therefore, light-colored tall oil rosin to be expected is hard to obtain.

In the method described in Patent Document 2, the obtained tall oil rosin is far from a light color. Additionally, carbons need to be separated from the obtained tall oil rosin ester. However, since a melt viscosity of rosin esters is high, a separation operation is not easy.

For another means, a method of obtaining a light-colored product by highly hydrogenating tall oil rosin or a tall oil rosin ester is known. However, such method is expensive and does not satisfy the requirement in this field of providing and using inexpensive tall oil rosin or a tall oil rosin ester.

The present invention is made in view of the above conventional problems, and the invention aims to provide a method of producing relatively inexpensive light-colored purified tall oil rosin and a tall oil rosin ester in a simplified manufacturing method, and light-colored purified tall oil rosin and a tall oil rosin ester obtained from this manufacturing method.

In order to solve the above problems, as a result of a diligent study of a decolorant which can be used as it is without separation in a distillation operation of tall oil rosin and is excellent in a decoloration effect, the inventors have found that the use of activated carbon can surprisingly solve the above problems and completed the present invention.

The subject-matter of the present invention are methods according to claims 1-8 as attached. Herein are described so-called aspects of the invention which do not fall under said claims 1-8. That is, a manufacturing method of light-colored purified tall oil rosin in accordance with an aspect of the present invention comprises a distillation process of distilling unpurified tall oil rosin in the presence of activated carbon.

Moreover, purified tall oil rosin in accordance with an aspect of the present invention is purified tall oil rosin obtained from the above manufacturing method of light-colored purified tall oil rosin.

Further, a manufacturing method of a tall oil rosin ester in accordance with an aspect of the present invention comprises:
a rosin production process of producing light-colored purified tall oil rosin by the above manufacturing method of light-colored purified tall oil rosin,
an esterification process of carrying out an esterification reaction of the purified tall oil rosin obtained in the rosin production process and alcohols, and
an antioxidant-addition-process of adding at least one antioxidant selected from the group consisting of a sulfur-based organic compound, thiophosphite-based organic compound and a phosphorus-based antioxidant, which is performed during or after said esterification process.

Additionally, a tall oil rosin ester in accordance with an aspect of the present invention is a tall oil rosin ester obtained from the above manufacturing method of a tall oil rosin ester.

### BRIEF DESCRIPTION OF THE DRAWINGS

FIG. 1 is an actual GPC chart of tall oil rosin esters of Example 9 and Example 13.
FIG. 2 is an actual GPC chart of tall oil rosin esters of Example 13 and Example 15.

### EMBODIMENT FOR CARRYING OUT THE INVENTION

### [Manufacturing method of light-colored purified tall oil rosin]

In the following, an embodiment of a manufacturing method of light-colored purified tall oil rosin (hereinafter, also referred to as "product rosin") of the present invention will be explained. The manufacturing method of light-colored purified tall oil rosin of this embodiment is characterized by comprising a distillation process of distilling unpurified tall oil rosin in the presence of activated carbon.

It is noted that in the embodiment, "light-colored" refers to a condition where a color of unpurified product is lightened by a treatment such as distillation. The unpurified tall oil rosin (hereinafter, also referred to as "raw material rosin") used in the embodiment is tall oil rosin to which a specific purification has not been carried out. Such raw material rosin is a mixture of resin acids mainly composed of a resin acid such as abietic acid, palustric acid, neoabietic acid, pimaric acid, isopimaric acid, dehydroabietic acid and the like, comprising subcomponents such as a fatty acid, a high molecular weight component, an unsaponifiable matter, a neutral component, a colored component and the like. These subcomponents easily become a cause of coloration or odor compared with the resin acid as a main component. In the embodiment, commercially available unpurified tall oil rosin is used as a raw material rosin without a specific limitation.

In the embodiment, "purification" is a treatment of removing subcomponents such as; color-exhibiting components having molecular weight ranging from high to low, which are considered to be originating from certain peroxides being present in a raw material rosin; a metal ion; an unsaponifiable originally contained in the rosin and the like.

### <Distillation process>

A distillation process is a process of distilling unpurified tall oil rosin. In the embodiment, "distillation" includes various kinds of distillation such as a normal simple distillation, a thin film distillation, a rectification and the like. The condition of distillation is generally determined appropriately within the range of a distilling temperature of 185 to 260°C, preferably 195 to 255°C and a pressure of 1 to 30 hPa, preferably 1 to 20 hPa, considering a distillation time.

As for a material of activated carbon, for example, sawdust, wood chip, wood charcoal, coconut husk charcoal, coal, phenol resin, rayon and the like are used. An activation reaction may be either of a chemical activation or a gas activation. As for a chemical used in a chemical activation, for example, a zinc chloride, a phosphoric acid and the like can be industrially used. Examples of gas used in a gas activation include steam, carbon dioxide, air, combustion gas and the like. Activated carbon used in the embodiment can be used without a specific limitation. It is preferable that the activated carbon has a certain specific surface area, pore volume and average pore diameter, in view of an excellent light-coloring effect. Specifically, the specific surface area is preferably not less than 300 m²/g, more preferably not less than 400 m²/g, particularly preferably not less than 500 m²/g. On the other hand, the specific surface area is preferably not more than 1,700 m²/g, more preferably not more than 1,500 m²/g, particularly preferably not more than 1,400 m²/g. The pore volume is preferably not less than 0.10 ml/g, more preferably not less than 0.15 ml/g, particularly preferably not less than 0.25 ml/g. On the other hand, the pore volume is preferably not more than 2.0 ml/g, more preferably not more than 1.5 ml/g, particularly preferably not more than 1.0 ml/g. The average pore diameter is preferably not less than 1.0 nm, more preferably not less than 1.4 nm, particularly preferably not less than 1.6 nm. On the other hand, the average pore diameter is preferably not more than 5.0 nm, more preferably not more than 4.0 nm, particularly preferably not more than 3.5 nm.

In the distillation process, a disproportionation catalyst as detailed in claim 1 is added in order to prevent an initial color tone of a rosin ester from deteriorating due to a heating in an esterification reaction adopted in the case where a later described tall oil rosin ester is produced, or to reduce deterioration of color tone (maintain stability of color tone) due to a heating of the obtained rosin ester. The disproportionation catalyst is not limited particularly and is appropriately selected from various known disproportionation catalysts and used. For example, as for a disproportionation catalyst, supported catalysts such as palladium on carbon, rhodium on carbon and platinum on carbon, metal powder of such as nickel and platinum, iodides such as iodine and iron iodide and the like are used. Among these, palladium, rhodium, nickel and platinum are preferable as a disproportionation catalyst. These disproportionation catalysts may be used in combination.

A carrier used for a supported catalyst is not limited particularly and is appropriately selected from various known carriers and used. Specifically, carbon, silica, alumina, zeolite, diatomite and hydrotalcite are preferable as a carrier.

Moreover, among these disproportionation catalysts, palladium on carbon, rhodium on carbon, platinum on carbon and the like are more preferable.

The used amount of a disproportionation catalyst is normally not less than 0.01% by weight, preferably not less than 0.05% by weight based on unpurified tall oil rosin. On the other hand, the used amount of a disproportionation catalyst is normally not more than 3.0% by weight, preferably not more than 1.0% by weight based on unpurified tall oil rosin. If the used amount of the disproportionation catalyst is more than 3.0% by weight, it may result in an increase of the price of the obtained purified tall oil rosin. On the other hand, if the used amount of the disproportionation catalyst is less than 0.01% by weight, the effect obtained by adding the disproportionation catalyst is difficult to obtain.

The purified tall oil rosin obtained via the distillation process has an improved light color and a satisfactory color tone. Such color tone is less than 4, preferably not more than 3 in Gardner color scale (in accordance with JIS K5902). It is noted that in the embodiment, the Gardner scale of "less than 4" includes 4⁻ and does not include 4 and 4⁺.

As for another physical property of the purified tall oil rosin, an acid value (JIS K2501) is, normally, preferably not less than 155 mgKOH/g, more preferably not less than 165 mgKOH/g. On the other hand, the acid value is preferably not more than 180 mgKOH/g, more preferably not more than 180 mgKOH/g.

According to the above manufacturing method of purified tall oil rosin of the embodiment, light-colored purified tall oil rosin can be produced from unpurified tall oil rosin substantially solely by the distillation process. Therefore, the manufacturing method of the embodiment has a simplified process compared with that of a conventional method and can provide light-colored purified tall oil rosin relatively inexpensively. Additionally, the obtained purified tall oil rosin has an improved light color and a satisfactory color tone. Therefore, the purified tall oil rosin is industrially valuable and becomes a useful raw material for producing various derivatives (for example, a tall oil rosin ester as described below).

### [Manufacturing method of tall oil rosin ester]

In the following, an embodiment of a manufacturing method of a tall oil rosin ester of the present invention will be explained in detail. The manufacturing method of the tall oil rosin ester of the embodiment comprises a rosin production process and an esterification process. In the following, each of the processes will be explained.

### <Rosin production process>

The rosin production process is a process for producing the above light-colored purified tall oil rosin. As described above, the obtained purified tall oil rosin has an improved light color and a satisfactory color tone. In this embodiment, by further esterifying such light-colored purified tall oil rosin, a tall oil rosin ester which also has a satisfactory color tone is produced.

### <Esterification process>

The esterification process is a process of carrying out an esterification reaction of the purified tall oil rosin obtained in the rosin production process and alcohols.

As for alcohols, generally, various known alcohols which are used in a production of a rosin ester can be used without a specific limitation. Examples of alcohols include a monohydric alcohol such as n-octyl alcohol, 2-ethylhexyl alcohol, decyl alcohol and lauryl alcohol; a dihydric alcohol such as ethylene glycol, diethylene glycol, propylene glycol, neopentyl glycol, cyclohexane dimethanol and the like; a trihydric alcohol such as glycerol, trimethylolethane, trimethylolpropane and the like; and a tetrahydric alcohol such as pentaerythritol, diglycerol and the like. Examples of alcohols also include a monofunctional epoxy compound such as methylglycidyl ether, ethylglycidyl ether, phenylglycidyl ether and the like, in which each epoxy group can be equated to a pair of hydroxyl groups; and a polyfunctional epoxy compound such as ethylene glycol diglycidyl ether, polyethylene glycol diglycidyl ether, propylene glycol diglycidyl ether, polypropylene glycol diglycidyl ether, bisphenol A diglycidyl ether and the like. These may be used in combination of two or more kinds. Among these, a certain alcohol (e.g. pentaerythritol) is less reactive and thus needs high temperature to be esterified, so that the tall oil rosin ester using such alcohol tends to be dark-colored strongly due to the high reaction temperature. In this respect, the manufacturing method of a tall oil rosin ester of the embodiment involves the use of the above said light-colored purified tall oil rosin and the additional use of an antioxidant described below, which prevents the tall oil rosin from being deteriorated during the esterification reaction and the resulting tall oil rosin ester is a light-colored tall oil rosin ester that is not strongly dark colored.

As for conditions at the esterification, a normal esterification condition can be adopted without a specific limitation. For example, the esterification can be carried out by preparing a predetermined amount of an antioxidant as described below, a given rosin and an alcohol in a reaction container and heating a mixture usually at 150 to 300°C in a stream of an inert gas under atmospheric pressure to proceed a reaction while removing generated water from the mixture to the outside of the reaction system under stirring. The prepared amount ratio of the rosin and the alcohol is not limited particularly. The prepared amount ratio of these is normally adjusted to be about 1:1.5 to 1:0.7 at an equivalence ratio of a total amount of carboxyl groups and a total amount of hydroxyl groups. It is noted that in the case where carboxylic acids as described below are added in the esterification process, carboxyl groups of these carboxylic acids are also considered in the prepared amount ratio. Also, in the case where an epoxy compound is used as an alcohol, the number of hydroxyl groups is calculated as two. Additionally, an esterification catalyst may be added to shorten the reaction time. As for such esterification catalyst, acid catalysts such as acetic acid, p-toluenesulfonic acid, phosphorous acid, hypophosphorous acid and the like and a metal salt thereof, an amine salt, a neutralizing product such as, ammonium salt and the like, a hydroxide of an alkali metal such as lithium hydroxide and the like, a hydroxide of an alkaline earth metal such as calcium hydroxide and the like, a metal oxide such as calcium oxide, magnesium oxide, zinc oxide and the like, and a phosphorous acid ester as described below are used.

### (Antioxidant-addition-process)

The manufacturing method of a tall oil rosin ester of the embodiment is characterized by comprising an antioxidant-addition-process of adding at least one antioxidant selected from the group consisting of a sulfur-based organic compound, a thiophosphite-based organic compound and a phosphorus-based antioxidant during or after the esterification process. By adding these antioxidants, deterioration due to oxidation at the esterification can be prevented and heating stability of the obtained tall oil rosin ester can be improved. That is, in a normal esterification process, a color tone of the purified tall oil rosin (or obtained tall oil rosin ester) easily turns yellow to yellowish brown due to, for example, heating. However, according to the manufacturing method of a tall oil rosin ester of the embodiment, these specific antioxidants are added during or after the esterification process. Therefore, a color tone of the purified tall oil rosin which already has an excellent color tone is hard to deteriorate and the excellent color tone is easy to maintain.

The sulfur-based organic compounds are not limited particularly and can be selected from various known sulfur-based organic compounds and used. For example, examples of a sulfur-based organic compounds are various phenol sulfides described in JP 59-230072 A. More specifically, examples of the sulfur-based organic compounds include 2,4-bis(dodecylthiomethyl)-6-methylphenol, 4,4'-bis(phenol)sulfide, 4,4'-bis(phenol)sulfoxide, 4,4'-bis(phenol)sulfone, 4,4'-bis(phenol)thiolsulfinate, 4,4'-bis(phenol)thiolsuofonate, 2,2'-bis(p-cresol)sulfide, 2,2'-bis(p-cresol)sulfoxide, 2,2'-bis(p-cresol)sulfone, 2,2'-bis(p-t-butylphenol)sulfide, 2,2'-bis(p-t-butylphenol)sulfoxide, 2,2'-bis(p-t-butylphenol)sulfone, 4,4'-bis(6-t-butyl-m-cresol)sulfoxide, 4,4'-bis(6-t-butyl-m-cresol)sulfide, 4,4'-bis(6-t-butyl-o-cresol)sulfoxide, 4,4'-bis(6-t-butyl-o-cresol)sulfone, 4,4'-bis(6-t-butyl-o-cresol)sulfone, 4,4'-bis(resorcinol)sulfide, 4,4'-bis(resorcinol)sulfoxide, 4,4'-bis(resorcinol)sulfone, 1,1'-bis((β-naphthol)sulfide, 1,1'-bis(β-naphthol)sulfoxide, 1,1'-bis(β-naphthol)sulfone, 4,4'-bis(α-naphthol)sulfide, 4,4'-bis(α-naphthol)sulfoxide, 4,4'-bis(α-naphthol)sulfone, t-amylphenol disulfide oligomer, nonylphenol disulfide oligomer and the like. These compounds may be used alone, or may be used in combination of two or more kinds appropriately. Further, sulfur-based organic compounds other than phenol sulfides such as 2,2-bis[{3-(dodecylthio)-1-oxopropoxy}methyl]propane-1,3-diyl bis[3-(dodecylthio)propionate] may be also used. The used amount of the sulfur-based organic compound is not limited particularly. In view of an excellent light-coloring effect and economic efficiency, the used amount of the sulfur-based organic compound is usually preferably not less than 0.01% by weight, more preferably not less than 0.05% by weight based on the product rosin. On the other hand, the used amount of the sulfur-based organic compound is usually preferably not more than 5% by weight, more preferably not more than 2% by weight based on the product rosin.

The thiophosphite-based organic compounds are not limited particularly and can be selected from various known thiophosphite-based organic compounds and used. Examples of the thiophosphite-based organic compound include trilauryl trithiophosphite, tridecyl trithiophosphite, tribenzyl trithiophosphite, tricyclohexyl trithiophosphite, tri(2-ethylhexyl) trithiophosphite, trinaphthyl trithiophosphite, diphenyldecyl trithiophosphite, diphenyllauryl trithiophosphite, tetralauryl-4-oxaheptylene-1,7-tetrathiophosphite, tetrakis(mercaptolauryl)-1,6-dimercaptohexylene diphosphite, pentakis(mercaptolauryl)bis(1,6-hexylene-dimercapto) trithiophosphite, tetrakis(mercaptolauryl)-2,9-dimercapto-p-methylene diphosphite, bis(mercaptolauryl)-1,6-dimercaptohexylene-bis(benzene phosphite), dioctyldithiopentaerythritol diphosphite, dilauryldithiopentaerythritol diphosphite, phenyllauryldithiopentaerythritol diphosphite and the like. These compounds may be used alone, or may be used in combination of two or more kinds appropriately. The used amount of the thiophosphite-based organic compound is not limited particularly. In view of an excellent light-coloring effect and economic efficiency, the used amount of the thiophosphite-based organic compound is usually preferably not less than 0.01% by weight, more preferably not less than 0.05% by weight based on the product rosin. On the other hand, the used amount of the thiophosphite-based organic compound is usually preferably not more than 2.0% by weight, more preferably not more than 1.0% by weight based on the product rosin.

The phosphorus-based antioxidants are not limited particularly and can be selected from various known phosphorus-based compounds and used. Examples of the phosphorus-based antioxidants include phosphorous acid, hypophosphorous acid and a metal salt thereof, a neutralizing product such as an amine salt, an ammonium salt or the like, trisphenyl phosphite, tris(nonylphenyl)phosphite, tris(2-ethylhexyl)phosphite, tridecyl phosphite, tris(tridecyl)phosphite, diphenylmono(2-ethylhexyl)phosphite, diphenylmonodecyl phosphite, diphenylmono(tridecyl)phosphite, 3,9-bis(2,6-di-t-butyl-4-methylphenoxy)-2,4,8,10-tetraoxa-3,9-diphosp haspiro[5, 5]undecane, dilauryl hydrogen phosphite, diphenyl hydrogen phosphite, tetraphenyl dipropyleneglycol diphosphite, tetraphenyltetra(tridecyl)pentaerythritol tetraphosphite, tetra(tridecyl)-4,4'-isopropylidene diphenyl diphophite, bis(t-butylphenyl)pentaerythritol diphosphite, bis(2,4-di-t-butylphenyl)pentaerythritol diphosphite, bis(2,6-di-t-butyl-4-methylphenyl)pentaerythritol diphosphite, bis(nonylphenyl)pentaerythritol diphosphite, distearyl pentaerythritol diphosphite, tris(2,4-di-t-butylphenyl)phosphite, hydrogenated bisphenol A-pentaerythritol phosphite polymer, 9,10-dihydro-9-oxa-10-phosphaphenanthrene-10-oxide and the like. In order to obtain a rosin ester having an excellent color tone, among these, it is further preferable to use phosphorous acid, hypophosphorous acid and a metal salt thereof, a neutralizing product such as amine salt, ammonium salt and the like, diphenyl hydrogen phosphite, bis(t-butylphenyl)pentaerythritol diphosphite, 3,9-bis(2,6-di-t-butyl-4-methylphenoxy)-2,4,8,10-tetraoxa-3,9-diphosp haspiro[5, 5]undecane, bis(2,4-di-t-butylphenyl)pentaerythritol diphosphite, bis(4-methyl-2,6-di-t-butylphenyl)pentaerythritol diphosphite, bis(nonylphenyl)pentaerythritol diphosphite, distearyl pentaerythritol diphosphite, 9,10-dihydro-9-oxa-10-phosphaphenanthrene-10-oxide and the like. Moreover, some phosphorus-based antioxidants can function also as an esterification catalyst. The phosphorus-based antioxidants may be used alone, or may be used in combination of two or more kinds appropriately. The used amount of the phosphorus-based antioxidant is not limited particularly. In view of the above effects, the used amount of the phosphorus-based antioxidants is usually preferably not less than 0.01% by weight, more preferably not less than 0.05% by weight based on the product rosin. On the other hand, the used amount of the phosphorus-based antioxidants is usually preferably not more than 5.0% by weight, more preferably not more than 3.0% by weight based on the product rosin.

### (Carboxylic acid-addition-process)

The manufacturing method of a tall oil rosin ester of the embodiment may further comprise a carboxylic acid-addition-process of adding a carboxylic acid in the esterification process. The carboxylic acid-addition-process is a process of adding at least one compound selected from the group consisting of a carboxyl acid, a carboxylic acid anhydride and carbon acid esters.

Various known compounds generally used in a production of a rosin ester can be used as carboxylic acids without a specific limitation. Specifically, examples thereof include monobasic acids such as benzoic acid, p-t-butylbenzoic acid, acrylic acid and the like, polybasic acids such as maleic acid, fumaric acid, itaconic acid, phthalic acid, isophthalic acid, terephthalic acid, trimellitic acid, adipic acid, sebacic acid, azelaic acid, hexahydrophthalic acid, tetrahydrophthalic acid, dimethyl-1,4-cyclohexanedicarboxylic acid and the like, and acid anhydrides or esters of these carboxylic acids. These carboxylic acids may be used alone, or may be used in combination of two or more kinds appropriately.

By using carboxylic acids, the obtained purified tall oil rosin ester has a high molecular weight and a wide molecular weight distribution. By using such tall oil rosin ester having a high molecular weight and a wide molecular weight distribution, a tackifier in which compatibility with a base resin as a main agent in adhesion application and adhesive property such as adhesion to a substrate, tackiness and preservability, heat resistance, solvent resistance, water resistance and the like are optimized can be configured.

The used amount of these carboxylic acids is not limited particularly. In view of compatibility with a base resin as a main agent and adhesion to a substrate in takifier application, the used amount of the carboxylic acids is preferably not more than 10.0% by weight, more preferably not more than 5.0% by weight based on the product rosin. On the other hand, the used amount of the carboxylic acids is preferably not less than 0.5% by weight based on the product rosin.

### (Hindered phenolic antioxidant-addition-process)

The manufacturing method of a tall oil rosin ester of the embodiment may further comprise a hindered phenolic antioxidant-addition-process of adding a hindered phenolic antioxidant during or after the esterification process.

The hindered phenolic antioxidant is not limited particularly and can be selected from various known hindered phenolic antioxidants and used. Examples thereof include triethylene glycol bis{3-(3-t-butyl-5-methyl-4-hydroxyphenyl)propionate}, 1,6-hexanediol bis{3-(3,5-di-t-butyl-4-hydroxyphenyl)propionate}, pentaerythrityl tetrakis{3-(3,5-di-t-butyl-4-hydroxyphenyl)propionate}, octadecyl-3-(3,5-di-t-butyl-4-hydroxyphenyl)propionate, 3,9-bis[2-{3-(3-t-butyl-4-hydroxy-5-methylphenyl)propionyloxy}-1,1-di methylethyl]-2,4,8,10-tetraoxaspiro[5,5]undecane, N,N'-hexamethylene bis(3,5-di-t-butyl-4-hydroxy-hydrocinnamide, 1,3,5-trimethyl-2,4,6-tris(3,5-di-t-butyl-4-hydroxybenzyl)benzene and the like. The hindered phenolic antioxidants may be used alone, or may be used in combination of two or more kinds appropriately.

The used amount of the hindered phenolic antioxidant is not limited particularly. In view of further prevention of deterioration due to oxidation at the esterification reaction and further light-coloring effect, the used amount of the hindered phenolic antioxidant is preferably not less than 0.01% by weight, more preferably not less than 0.05% by weight based on the product rosin. On the other hand, the used amount is usually preferably not more than 5.0% by weight, more preferably not more than 3.0% by weight based on the product rosin.

Returning to the explanation of the entire manufacturing method of a tall oil rosin ester, the tall rosin ester obtained via the above processes has an improved light color and a satisfactory color tone. Such color tone is less than 4, preferably not more than 3 in Gardner color scale (in accordance with JIS K5902). An acid value (in accordance with JIS K2501) is preferably not more than 30 mgKOH/g.

According to the above manufacturing method of a tall oil rosin ester of the embodiment, a tall oil rosin ester which has an improved light color and is excellent in various capacities such as odor at heating, stability, compatibility and the like can be obtained. Therefore, the tall oil rosin ester is industrially valuable and can be suitably used for a tackifier for a pressure sensitive adhesive or a hot melt adhesive, a modifier of rubbers and various plastics, a raw material for traffic paint, a modifier of ink or paint and the like, and can improve a commercial value of final products in these applications.

In the above, an embodiment of the present invention is explained. The present invention is not limited to the above embodiment. It is noted that the above embodiment is mainly for explaining the invention having the following features.
(1) A method for manufacturing a light-colored purified tall oil rosin, comprising a distillation process of distilling an unpurified tall oil rosin in the presence of an activated carbon.
(2) The method for manufacturing the light-colored purified tall oil rosin of (1), wherein the purified tall oil rosin has a Gardner color scale of less than 4 and an acid value of 155 to 180 mgKOH/g.
(3) The method for manufacturing the light-colored purified tall oil rosin of (1) or (2), wherein the activated carbon has a specific surface area of from 300 to 1,700 m²/g, a pore volume of from 0.10 to 2.0 ml/g and an average pore diameter of from 1.0 to 5.0 nm.
(4) The method for manufacturing the light-colored purified tall oil rosin of any of (1) to (3), wherein the distillation process is carried out in the presence of a disproportionation catalyst.
(5) The method for manufacturing the light-colored purified tall oil rosin of (4), wherein the disproportionation catalyst is a supported catalyst comprising a carrier to which at least one metal selected from the group consisting of palladium, rhodium, nickel and platinum is supported.
(6) The method for manufacturing the light-colored purified tall oil rosin of (5), wherein the carrier is a carrier at least one selected from the group consisting of a carbon, a silica, an alumina, a zeolite, a diatomite and a hydrotalcite.
(7) A purified tall oil rosin obtained by the manufacturing method of the light-colored purified tall oil rosin of any of (1) to (6).
(8) A method for manufacturing a tall oil rosin ester comprising:
   a rosin production process of producing a light-colored purified tall oil rosin by the method for manufacturing method of light-colored purified tall oil rosin of any of (1) to (6),
   an esterification process of carrying out an esterification reaction of the purified tall oil rosin obtained in the rosin production process and alcohols; and
   further comprising:
      an antioxidant-addition-process of adding thereto at least one antioxidant selected from the group consisting of a sulfur-based organic compound, a thiophosphite-based organic compound and a phosphorus-based antioxidant, wherein the antioxidant-addition-process is carried out during or after the esterification process.
(9) The method for manufacturing the tall oil rosin ester of (8), further comprising a carboxylic acids-addition-process of adding thereto at least one compound selected from the group consisting of a carboxylic acid, a carboxylic acid anhydride and carboxylic acid esters in the esterification process.
(10) The method for manufacturing the tall oil rosin ester of (8) or (9), further comprising a hindered phenolic antioxidant-addition-process of adding a hindered phenolic antioxidant during or after the esterification process.
(11) The method for manufacturing the tall oil rosin ester of any of (8) to (10), wherein the tall oil rosin ester has a Gardner color scale of less than 4.
(12) A tall oil rosin ester obtained by the method for manufacturing the tall oil rosin ester of any of (8) to (11).

### EXAMPLE

The present invention will be explained more specifically by showing Examples and Comparative Examples in the following. The present invention is not limited to these Examples. In each Example and Comparative Example, parts and % are on a weight basis.

Raw materials used in Examples and Comparative Examples are as follows.

### (Unpurified tall oil rosin)

Unpurified tall oil rosin A: acid value of 174.7 mgKOH/g, softening point (as measured by a ring and ball method specified in JIS K 5902, the same applies hereafter) of 75.0°C, color tone Gardner of 6-

### (Activated carbon)

Activated carbon A: specific surface area of 1,443 m²/g, pore volume of 1.277 ml/g, average pore diameter of 3.54 nm
Activated carbon B: specific surface area of 1,143 m²/g, pore volume of 0.707 ml/g, average pore diameter of 2.47 nm
Activated carbon C: specific surface area of 1,133 m²/g, pore volume of 0.504 ml/g, average pore diameter of 1.78 nm
Activated carbon D: specific surface area of 491 m²/g, pore volume of 0.226 ml/g, average pore diameter of 1.85 nm
Activated carbon E: specific surface area of 110 m²/g, pore volume of 0.05 ml/g, average pore diameter of 1.80 nm

### (Disproportionation catalyst)

Disproportionation catalyst A: carbon containing 5% of palladium (water content: 50%)
Disproportionation catalyst B: carbon containing 5% of platinum (water content: 55%)
Disproportionation catalyst C: stabilized nickel (diatomite containing 45% of nickel)

### (Antioxidant)

Phosphorus-based antioxidant A: tetraalkyl-4,4'-isopropylidenediphenyl diphosphite, trade name "ADK STAB 1,500" manufactured by ADEKA CORPORATION
Phosphorus-based antioxidant B: 9,10-dihydro-9-oxa-10-phos phaphenanthrene-10-oxide (trade name "HCA" manufactured by SANKO CO.,LTD.)
Phosphorus-based antioxidant C: 3,9-bis(2,6-di-t-butyl-4-methylphenoxy)-2,4,8,10-tetraoxa-3,9-diphosp haspiro[5.5]undecane (trade name "ADK STAB PEP36" manufactured by ADEKA CORPORATION)
Phosphorus-based antioxidant D: tris(2,4-di-t-butylphenyl)phosphite (trade name "Irgafos 168" manufactured by BASF Japan Ltd.)
Sulfur-based organic compound A: 4,4'-thiobis(6-t-butyl-3-methylphenol) (trade name "SUMILIZER WX-RC" manufactured by Sumitomo Chemical Company, Limited)
Sulfur-based organic compound B: 2,2-bis{[3-(dodecylthio)-1 -oxopropoxy]methyl}propane-1,3-diyl bis[3-(dodecylthio)propionate] (trade name "SUMILIZER TP-D" manufactured by Sumitomo Chemical Company, Limited)
Thiophosphite-based organic compound A: trilauryl trithiophosphite (trade name "JPS-312" manufactured by JOHOKU CHEMICAL CO., LTD)
Hindered phenolic antioxidant A: octadecyl-3-(3,5-di-t-butyl-4-hydroxyphenyl)propionate (trade name "Irgafos 1076" manufactured by BASF Japan Ltd.)
Hindered phenolic antioxidant B: 2,5-di-t-butylhydroquinone (trade name "Nocrac NS-7" manufactured by OUCHI SHINKO CHEMICAL INDUSTRIAL CO., LTD)
Hindered phenolic antioxidant C: 3,9-bis[2-[3-(3-t-butyl-4-hydroxy-5-methylphenyl)propionyloxy]-1,1-di methylethyl)-2,4,8,10-tetraoxaspiro[5,5]undecane (trade name "SUMILIZER GA-80" manufactured by Sumitomo Chemical Company, Limited)

### <Production of purified tall oil rosin>

### (Example 1)

To a distillation container were added 1,000 parts of unpurified tall oil rosin A and 30.0 parts of activated carbon A, followed by distillation under a reduced pressure of 4 hPa under nitrogen seal to obtain purified tall oil rosin (hereinafter referred to as "purified tall oil rosin (a)") as a main distillate. The distillation temperature of an initial distillate was less than 195°C and the temperature inside a pot was less than 210°C. The distillation temperature of the main distillate was not less than 195°C and less than 255°C and the temperature inside the pot was not less than 210°C and less than 280°C. The distillation temperature of a residue was not less than 255°C and the temperature inside the pot was not less than 280°C.

### (Example 2)

The distillation was carried out in the same manner as that of Example 1 except that activated carbon A had been replaced by activated carbon B to obtain purified tall oil rosin (hereinafter referred to as "purified tall oil rosin (b)") as a main distillate.

### (Example 3)

The distillation was carried out in the same manner as that of Example 1 except that activated carbon A had been replaced by activated carbon C to obtain purified tall oil rosin (hereinafter referred to as "purified tall oil rosin (c)") as a main distillate.

### (Example 4)

The distillation was carried out in the same manner as that of Example 1 except that activated carbon A had been replaced by activated carbon D to obtain purified tall oil rosin (hereinafter referred to as "purified tall oil rosin (d)") as a main distillate.

### (Example 5)

The distillation was carried out under a reduced pressure in the same manner as that of Example 1 except that activated carbon A had been replaced by activated carbon E to obtain purified tall oil rosin for comparison (hereinafter referred to as "purified tall oil rosin (e)") as a main distillate.

### (Example 6)

To a distillation container were added 1,000 parts of unpurified tall oil rosin A, 25.0 parts of activated carbon C and 5.0 parts of disproportionation catalyst A, followed by distillation under a reduced pressure of 4 hPa under nitrogen seal to obtain purified tall oil rosin (hereinafter referred to as "purified tall oil rosin (f)") as a main distillate.

### (Example 7)

The distillation was carried out in the same manner as that of Example 6 except that the disproportionation catalyst A had been replaced by the disproportionation catalyst B to obtain purified tall oil rosin (hereinafter referred to as "purified tall oil rosin (g)") as a main distillate.

### (Example 8)

The distillation was carried out in the same manner as that of Example 6 except that the disproportionation catalyst A had been replaced by the disproportionation catalyst C to obtain purified tall oil rosin (hereinafter referred to as "purified tall oil rosin (h)") as a main distillate.

### (Comparative Example 1)

The distillation was carried out under a reduced pressure in the same manner as that of Example 1 except that activated carbon had not been used to obtain purified tall oil rosin for comparison (hereinafter referred to as "purified tall oil rosin (i)") as a main distillate.

Color tones (Gardner color scale in accordance with JIS K5902), acid values (in accordance with JIS K2501), softening points and yields of the main distillates in Examples 1 to 8 and Comparative Example 1 are shown in Table 1.

**[Table 1]**

| | Activated carbon | Disproportionation catalyst | Obtained tall oil rosin | Result | | | |
|---|---|---|---|---|---|---|---|
| | | | | Color tone (Gardner color scale) | Acid value (mgKOH/g) | Softening point (°C) | Yield (%) |
| Example 1 | Activated carbon A | - | Purified tall oil rosin (a) | 2 to 3 | 170.0 | 67.5 | 74.3 |
| Example 2 | Activated carbon B | - | Purified tall oil rosin (b) | 2⁻ | 172.8 | 66.0 | 78.3 |
| Example 3 | Activated carbon C | - | Purified tall oil rosin (c) | 1⁺ | 174.3 | 69.0 | 75.3 |
| Example 4 | Activated carbon D | - | Purified tall oil rosin (d) | 2 to 3 | 178.4 | 72.5 | 76.1 |
| Example 5 | Activated carbon E | - | Purified tall oil rosin (e) | 4⁻ | 173.5 | 72.5 | 79.0 |
| Example 6 | | Disproportionation catalyst A | Purified tall oil rosin (f) | 2⁻ | 171.8 | 66.5 | 79.7 |
| Example 7 | Activated carbon C | Disproportionation catalyst B | Purified tall oil rosin (g) | 1⁺ | 168.8 | 67.0 | 77.1 |
| Example 8 | | Disproportionation catalyst C | Purified tall oil rosin (h) | 2 | 171.7 | 69.0 | 75.7 |
| Comparative Example 1 | - | - | Purified tall oil rosin (i) | 5 | 178.6 | 73.0 | 79.6 |

As shown in Table 1, in Examples 1 to 8 where the activated carbon A to E have been used, purified tall oil rosin having a light color and a better color tone was obtained, compared to Comparative Example 1 where activated carbon has not been used.

### <Production of purified tall oil rosin ester>

### (Example 9)

To a reaction container was added 1,000 parts of purified tall oil rosin (a), followed by heating to 180°C under nitrogen stream and stirring in a molten state. Then, 3 parts of phosphorus-based antioxidant A, 10 parts of phosphorus-based antioxidant B and 10 parts of fumaric acid were added and the temperature was maintained at 200°C for an hour. Then, 4 parts of sulfur-based organic compound A and 2.4 parts of phosphorus-based antioxidant C were added and 106.8 parts of pentaerythritol was added at 200°C, followed by heating to 255°C to carry out an esterification reaction at the same temperature for 12 hours. When the acid value became 30 mgKOH/g or less, 3.2 parts of phosphorus-based antioxidant D was added and the temperature was maintained as it was for an hour under a reduced pressure of 50 hPa, followed by cooling to 210°C and the pressure was returned to a normal pressure under nitrogen stream. Then, 2.6 parts of hindered phenolic antioxidant A was added and the mixture was stirred at the same temperature for ten minutes and taken out of the reaction container to obtain 990 parts (yield: 86.8%) of purified rosin ester A.

### (Example 10)

The esterification reaction was carried out in the same manner as that of Example 9 except that the purified tall oil rosin (a) had been replaced by the purified tall oil rosin (b) and the used amount of pentaerythritol was 108.5 parts, to obtain 995 parts (yield: 87.0%) of purified rosin ester B.

### (Example 11)

The esterification reaction was carried out in the same manner as that of Example 9 except that the purified tall oil rosin (a) had been replaced by the purified tall oil rosin (c) and the used amount of pentaerythritol was 109.4 parts, to obtain 998 parts (yield: 87.2%) of purified rosin ester C.

### (Example 12)

The esterification reaction was carried out in the same manner as that of Example 9 except that the purified tall oil rosin (a) had been replaced by the purified tall oil rosin (d) and the used amount of pentaerythritol was 111.8 parts, to obtain 996 parts (yield: 86.8%) of purified tall oil rosin ester D.

### (Example 13)

To a reaction container was added 1,000 parts of purified tall oil rosin (f), followed by heating to 180°C under nitrogen stream and stirring in a molten state. Thereto were added 3 parts of phosphorus-based antioxidant A, 17 parts of phosphorus-based antioxidant B, 4 parts of thiophosphite-based organic compound A and 2.4 parts of phosphorus-based antioxidant C and the mixture was stirred for ten minutes. After elevating the temperature to 200°C and adding 126.2 parts of pentaerythritol, the temperature was elevated to 255°C and an esterification reaction was carried out at the same temperature for 12 hours. When the acid value became 30 mgKOH/g or less, 3.2 parts of phosphorus-based antioxidant D was added and the temperature was maintained as it was for an hour under a reduced pressure of 50 hPa, followed by cooling to 210°C and the pressure was returned to a normal pressure under nitrogen stream. Then, 10 parts of hindered phenolic antioxidant B was added and the mixture was stirred at the same temperature for 30 minutes and taken out of the reaction container to obtain 1,001 parts (yield: 85.9%) of purified rosin ester E.

### (Example 14)

Except that 2.5 of hindered phenolic antioxidant C and 2.5 parts of sulfur-based organic compound B were added instead of returning the pressure to a normal pressure under nitrogen stream after the esterification and adding 10 parts of hindered phenolic antioxidant B, 988 parts (yield: 85.1%) of purified rosin ester F was obtained in the same manner as that of Example 13.

### (Example 15)

To a reaction container was added 1,000 parts of purified tall oil rosin (f), followed by heating to 180°C under nitrogen stream and stirring in a molten state. Thereto were added 3 parts of phosphorus-based antioxidant A, 15 parts of phosphorus-based antioxidant B, 4 parts of the thiophosphite-based organic compound A and 3 parts of the phosphorus-based antioxidant C and the mixture was stirred for ten minutes. After elevating the temperature to 200°C and adding 122.5 parts of pentaerythritol, 6.0 parts of neopentyl glycol and 5.1 parts of trimethylolpropane, the temperature was elevated to 255°C and an esterification reaction was carried out at the same temperature for 12 hours. When the acid value became 30 mgKOH/g or less, 15.5 parts of adipic acid was added and the esterification was carried out at 255°C for further four hours. Then, 3.2 parts of phosphorus-based antioxidant D was added and the esterification was carried out at the same temperature for three hours under a reduced pressure of 50 hPa, followed by cooling to 210°C and the pressure was returned to a normal pressure under nitrogen stream. After that, 2.6 parts of hindered phenolic antioxidant C and 2.6 parts of sulfur-based organic compound B were added and the mixture was stirred at the same temperature for 30 minutes to obtain 1,017 parts (yield: 86.0%) of purified rosin ester G.

### (Comparative Example 2)

The esterification reaction was carried out in the same manner as that of Example 9 except that the purified tall oil rosin (a) was replaced by the purified tall oil rosin (i) and the used amount of pentaerythritol was 111.9 parts, to obtain 986 parts (yield: 86.0%) of purified rosin ester H for comparison.

### (Comparative Example 3)

To a reaction container was added 1,000 parts of purified tall oil rosin (i), followed by heating to 180°C under nitrogen stream and stirring in a molten state. Then, 3 parts of phosphorus-based antioxidant A and 10 parts of fumaric acid were added and the temperature was maintained at 200°C for an hour. Then, 4 parts of sulfur-based organic compound A and 0.14 part of calcium hydroxide were added and 111.9 parts of pentaerythritol was added at 200°C, followed by heating to 275°C to carry out an esterification reaction at the same temperature for ten hours. When the acid value became 30 mgKOH/g or less, 3.2 parts of phosphorus-based antioxidant D was added and the temperature was maintained as it was for an hour under a reduced pressure of 50 hPa, followed by cooling to 210°C and the pressure was returned to a normal pressure under nitrogen stream. After that, 2.6 parts of hindered phenolic antioxidant A was added and the mixture was stirred at the same temperature for ten minutes and taken out of the reaction container to obtain 962 parts (yield: 84.8%) of purified rosin ester I for comparison.

### (Comparative Example 4)

To a reaction container was added 1,000 parts of purified tall oil rosin (f), followed by heating to 200°C under nitrogen stream and stirring in a molten state. After adding 124.3 parts of pentaerythritol at 200°C, 0.2 part of p-toluenesulfonic acid monohydrate was added and the temperature was elevated to 275°C to carry out an esterification reaction at the same temperature for ten hours. When the acid value became 30 mgKOH/g or less, the temperature was maintained as it was for an hour under a reduced pressure of 50 hPa. The mixture was cooled to 210°C and the pressure was returned to a normal pressure under nitrogen stream and taken out of the reaction container to obtain 954 parts (yield: 84.8%) of purified rosin ester J for comparison.

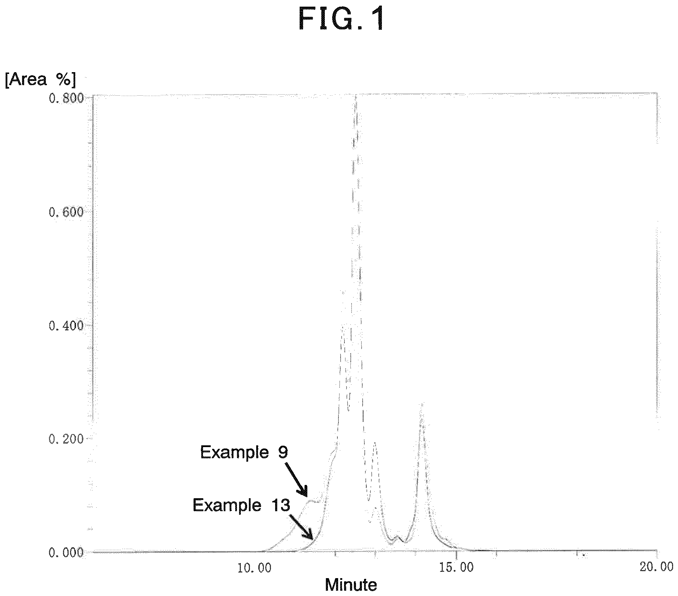

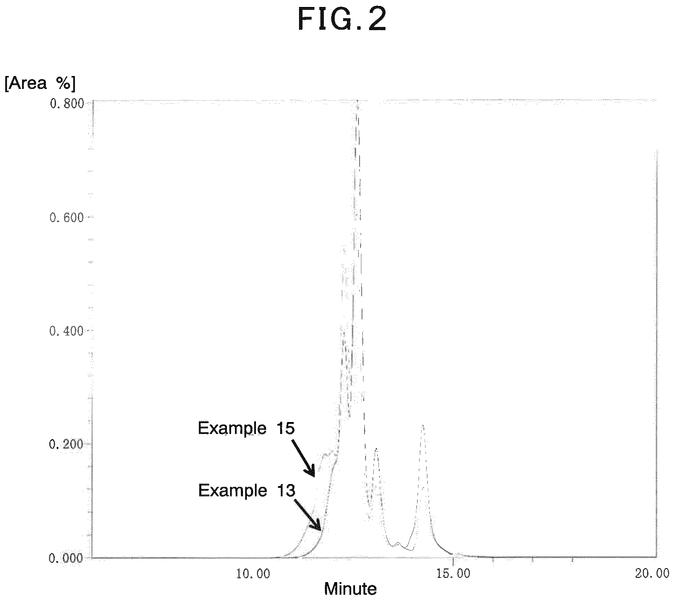

Color tones (Gardner color scale in accordance with JIS K5902), acid values (in accordance with JIS K5902) and softening points of the obtained purified rosin esters in Examples 9 to 15 and Comparative Examples 2 to 4 are shown in Table 2. Additionally, heating stability of the obtained purified rosin esters were evaluated by the following evaluation method. The results (color tone after 24 hours) are shown in Table 2. Moreover, a molecular weight and molecular weight distribution of the obtained purified rosin esters in Examples 9, 13 and 15 were measured by the following measurement method and it was confirmed that these purified rosin esters had a high molecular weight and a wide molecular weight distribution. The results are shown in Figs. 1 and 2. FIG. 1 is a GPC chart of the tall oil rosin esters of Example 9 and Example 13 and FIG. 2 is a GPC chart of the tall oil rosin esters of Example 13 and Example 15.

### (Heating stability)

To a test tube having an inner diameter of 1.5 cm and a height of 15 cm was put 5 g of rosin ester obtained respectively in Examples 9 to 15 and Comparative Examples 2 to 4. The test tube was allowed to stand in an air-circulating oven at 180°C without sealing to observe a color tone (Gardner color scale) after 24 hours.

### (Molecular weight, molecular weight distribution)

Each of the rosin esters obtained in Examples 9, 13 and 15 was diluted with THF so as to be a concentration of 0.34% and a weight average molecular weight (Mw), a number average molecular weight (Mn) and a molecular weight distribution (Mw/Mn) were measured in accordance with the following conditions.

### (Measurement condition)

GPC body: HLC-8120 (manufactured by TOSOH CORPORATION)
Column: TSKgel Super HM-L, three columns
Solvent: tetrahydrofuran (THF)
Measurement temperature: 40°C, flow rate: 0.6 ml/min

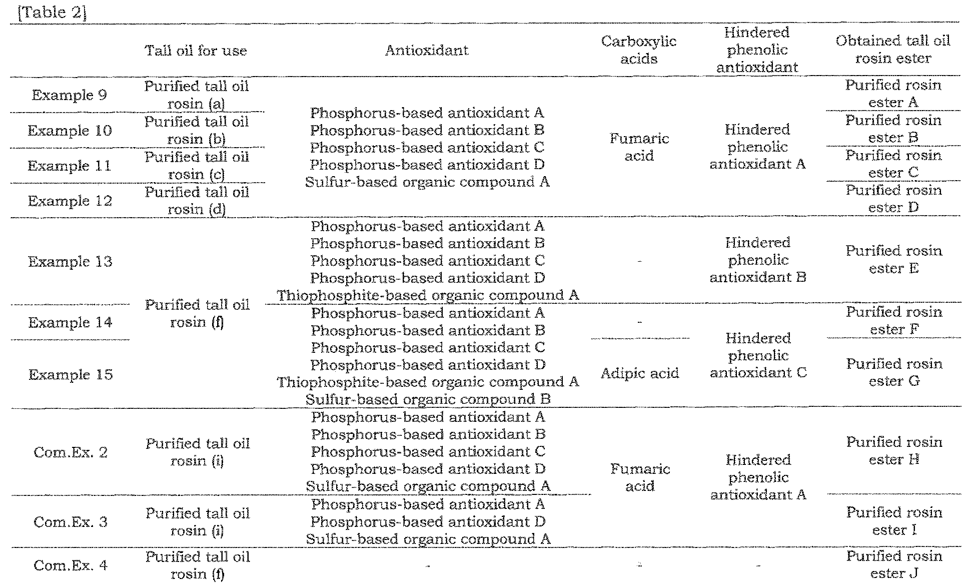

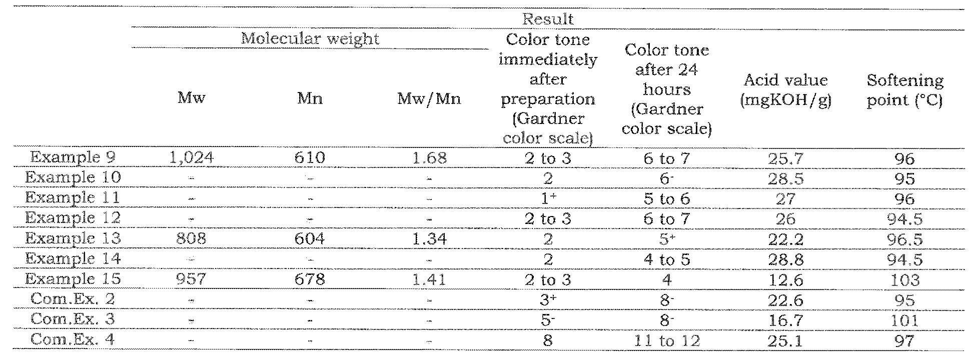

As shown in Table 2, in Examples 9 to 15 where purified tall oil rosin obtained by use of activated carbon in the distillation process was used and the esterification was carried out by use of antioxidants consisting of a phosphorus-based antioxidant, a thiophosphite-based antioxidant or a sulfur-based organic compound, tall oil rosin esters having a light color and a satisfactory color tone were obtained, compared to Comparative Examples 2 to 4 where purified tall oil rosin obtained without use of activated carbon in the distillation process was used or the esterification was carried out without use of the above antioxidants. Among these, compared to Example 13, in Examples 14 and 15 where a sulfur-based organic compound was further used as an antioxidant, tall oil rosin esters which had a satisfactory color tone and were excellent in heating stability were obtained.

## Claims

1. A method for manufacturing a light-colored purified tall oil rosin, comprising a distillation process of distilling an unpurified tall oil rosin in the presence of an activated carbon and a disproportionation catalyst which is a supported catalyst comprising a carrier on which at least one metal selected from the group consisting of palladium, rhodium, nickel and platinum is supported.

2. The method for manufacturing the light-colored purified tall oil rosin of claim 1, wherein the purified tall oil rosin has a Gardner color scale of less than 4.

3. The method for manufacturing the light-colored purified tall oil rosin of claim 1 or 2, wherein the activated carbon has a specific surface area of from 300 to 1,700 m²/g, a pore volume of from 0.10 to 2.0 ml/g and an average pore diameter of from 1.0 to 5.0 nm.

4. The method for manufacturing the light-colored purified tall oil rosin of claim 1, wherein the carrier is a carrier at least one selected from the group consisting of a carbon, a silica, an alumina, a zeolite, a diatomite and a hydrotalcite.

5. A method for manufacturing a tall oil rosin ester, comprising:
a rosin-production-process of producing a light-colored purified tall oil rosin by the manufacturing method of light-colored purified tall oil rosin of any of claims 1 to 4;
an esterification process of carrying out an esterification reaction of the purified tall oil rosin obtained in the rosin production process and alcohols; and
further comprising:
an antioxidant-addition-process of adding thereto at least one antioxidant selected from the group consisting of a sulfur-based organic compound, a thiophosphite-based organic compound and a phosphorus-based antioxidant, wherein the antioxidant-addition-process is carried out during or after the esterification process.

6. The method for manufacturing the tall oil rosin ester of claim 5, further comprising a carboxylic acids-addition-process of adding thereto at least one compound selected from the group consisting of a carboxylic acid, a carboxylic acid anhydride and carboxylic acid esters in the esterification process.

7. The method for manufacturing the tall oil rosin ester of claim 5 or 6, further comprising a hindered phenolic antioxidant-addition-process of adding a hindered phenolic antioxidant during or after the esterification process.

8. The method for manufacturing the tall oil rosin ester of any of claims 5 to 7, wherein the tall oil rosin ester has a Gardner color scale of less than 4.

## Patentansprüche

1. Ein Verfahren zur Herstellung eines hell gefärbten gereinigten Tallöl-Kolophoniums, das ein Destillationsverfahren zum Destillieren eines ungereinigten Tallöl-Kolophoniums in Gegenwart von Aktivkohle und einem Disproportionierungskatalysator, der ein Trägerkatalysator ist, der einen Träger umfasst, auf dem mindestens ein Metall ausgewählt aus der Gruppe bestehend aus Palladium, Rhodium, Nickel und Platin getragen wird, umfasst.

2. Das Verfahren zur Herstellung des hell gefärbten gereinigten Tallöl-Kolophoniums gemäß Anspruch 1, wobei das gereinigte Tallöl-Kolophonium eine Gardner-Farbzahl von weniger als 4 aufweist.

3. Das Verfahren zur Herstellung des hell gefärbten gereinigten Tallöl-Kolophoniums gemäß Anspruch 1 oder 2, wobei die Aktivkohle eine spezifische Oberfläche von 300 bis 1.700 m²/g, ein Porenvolumen von 0,10 bis 2,0 ml/g und einen durchschnittlichen Porendurchmesser von 1,0 bis 5,0 nm aufweist.

4. Das Verfahren zur Herstellung des hellen gefärbten gereinigten Tallöl-Kolophoniums gemäß Anspruch 1, wobei der Träger ein Träger ist, der mindestens eines ausgewählt aus der Gruppe bestehend aus Kohlenstoff, Siliciumdioxid, Aluminiumoxid, Zeolith, Kieselgur und Hydrotalcit ist.

5. Ein Verfahren zur Herstellung eines Tallöl-Kolophoniumesters, das umfasst:
ein Kolophonium-Herstellungsverfahren zur Herstellung eines hell gefärbten gereinigten Tallöl-Kolophoniums gemäß einem der Ansprüche 1 bis 4;
ein Veresterungsverfahren zur Durchführung einer Veresterungsreaktion des im Kolophonium-Herstellungsverfahren erhaltenen gereinigten Tallöl-Kolophoniums und von Alkoholen; und ferner umfasst:
ein Verfahren zur Antioxidanszugabe, bei dem mindestens ein Antioxidans, ausgewählt aus der Gruppe bestehend aus einer organischen Verbindung auf Schwefelbasis, einer organischen Verbindung auf Thiophosphitbasis und einem Antioxidans auf Phosphorbasis, zugegeben wird, wobei das Verfahren zur Antioxidanszugabe während oder nach dem Veresterungsprozess durchgeführt wird.

6. Das Verfahren zur Herstellung des Tallöl-Kolophoniumesters gemäß Anspruch 5, das weiterhin ein Verfahren zur Zugabe von Carbonsäuren umfasst, bei dem mindestens eine Verbindung ausgewählt aus der Gruppe bestehend aus einer Carbonsäure einem Carbonsäureanhydrid und Carbonsäureestern im Veresterungsverfahren hinzugefügt wird.

7. Das Verfahren zur Herstellung des Tallöl-Kolophoniumesters gemäß Anspruch 5 oder 6, das weiterhin ein Verfahren zur Zugabe eines gehinderten phenolischen Antioxidans, bei dem ein gehindertes phenolisches Antioxidans während oder nach dem Veresterungsprozess hinzugefügt wird, umfasst.

8. Das Verfahren zur Herstellung des Tallöl-Kolophoniumesters nach einem der Ansprüche 5 bis 7, wobei der Tallöl-Kolophoniumester eine Gardner-Farbzahl von weniger als 4 aufweist.

## Revendications

1. Procédé de fabrication d'une colophane d'huile de tall purifiée de couleur claire, comprenant un procédé de distillation qui consiste à distiller une colophane d'huile de tall non purifiée en présence de charbon actif et d'un catalyseur de dismutation qui est un catalyseur supporté comprenant un support sur lequel au moins un métal choisi dans le groupe constitué par le palladium, le rhodium, le nickel et le platine est supporté.

2. Procédé de fabrication de la colophane d'huile de tall purifiée de couleur claire de la revendication 1, dans lequel la colophane d'huile de tall purifiée a une échelle de couleur Gardner inférieure à 4.

3. Procédé de fabrication de la colophane d'huile de tall purifiée de couleur claire de la revendication 1 ou 2, dans lequel le charbon actif a une surface spécifique allant de 300 à 1700 m²/g, un volume des pores allant de 0,10 à 2,0 ml/g et un diamètre moyen de pore allant de 1,0 à 5,0 nm.

4. Procédé de fabrication de la colophane d'huile de tall purifiée de couleur claire de la revendication 1, dans lequel le support est au moins un support choisi dans le groupe constitué par un carbone, une silice, une alumine, une zéolite, une diatomite et une hydrotalcite.

5. Procédé de fabrication d'un ester de colophane d'huile de tall, comprenant :
un procédé de production de colophane qui consiste à produire une colophane d'huile de tall purifiée de couleur claire par le procédé de fabrication de colophane d'huile de tall purifiée de couleur claire de l'une des revendications 1 à 4 ;
un procédé d'estérification qui consiste à réaliser une réaction d'estérification de la colophane d'huile de tall purifiée obtenue dans le procédé de production de colophane et d'alcools ; et
comprenant en outre :
un procédé d'ajout d'antioxydant qui consiste à y ajouter au moins un antioxydant choisi dans le groupe constitué par un composé organique à base de soufre, un composé organique à base de thiophosphite et un antioxydant à base de phosphore, où le procédé d'ajout d'antioxydant est réalisé pendant ou après le procédé d'estérification.

6. Procédé de fabrication de l'ester de colophane d'huile de tall de la revendication 5, comprenant en outre un procédé d'ajout d'acides carboxyliques qui consiste à y ajouter au moins un composé choisi dans le groupe constitué par un acide carboxylique, un anhydride d'acide carboxylique et des esters d'acide carboxylique dans le procédé d'estérification.

7. Procédé de fabrication de l'ester de colophane d'huile de tall de la revendication 5 ou 6, comprenant en outre un procédé d'ajout d'antioxydant phénolique encombré qui consiste à ajouter un antioxydant phénolique encombré pendant ou après le procédé d'estérification.

8. Procédé de fabrication de l'ester de colophane d'huile de tall de l'une des revendications 5 à 7, dans lequel l'ester de colophane d'huile de tall a une échelle de couleur Gardner inférieure à 4.
